# EUROPÄISCHE PATENTSCHRIFT

(11) **EP 3 452 835 B1**
(45) Veröffentlichungstag und Bekanntmachung des Hinweises auf die Patenterteilung: **10.11.2021**
(21) Anmeldenummer: 17748670.1
(22) Anmeldetag: 19.07.2017
(51) Int. Cl.: G01N 35/10, B01L 3/02, G01F 23/26, G01N 35/00, G01D 5/241, B01L 3/00

(54) **PIPETTENSPITZE FÜR EINE AUTOMATISIERTE PIPETTIERVORRICHTUNG**
PIPETTE TIP FOR AN AUTOMATED PIPETTING DEVICE
POINTE DE PIPETTE POUR DISPOSITIF DE PIPETAGE AUTOMATIQUE

(30) Priorität: 22.07.2016 CH 9502016; 10.02.2017 CH 1592017; 19.04.2017 CH 5232017
(43) Veröffentlichungstag der Anmeldung: 13.03.2019
(73) Patentinhaber: Tecan Trading AG, 8708 Männedorf (CH)
(72) Erfinder: OTT, Philipp, 8496 Steg (CH)
(74) Vertreter: Troesch Scheidegger Werner AG
(86) Internationale Anmeldenummer: PCT/EP2017/068200
(87) Internationale Veröffentlichungsnummer: WO 2018/015419

(56) Entgegenhaltungen:
- EP-A1- 1 729 128
- DE-A1- 3 248 449
- US-A- 4 714 874
- US-A- 5 045 286
- US-A1- 2002 001 545
- US-A1- 2005 279 855
- US-A1- 2015 114 123
- US-B1- 6 551 558

## Beschreibung

### TECHNISCHES GEBIET DER ERFINDUNG

Die vorliegende Erfindung bezieht sich auf das technische Gebiet der automatisierten Flüssigkeitsbearbeitungssysteme und betrifft insbesondere Pipettenspitzen, vornämlich zum einmaligen Gebrauch (namentlich Wegwerf-Pipettenspitzen, englisch genannt "disposable tips", abgekürzt "DiTis"), welche zum Pipettieren, d.h. zum Aufnehmen bzw. Aspirieren und/oder Abgeben bzw. Dispensieren, von Flüssigkeiten verwendet werden. Des Weiteren betrifft die vorliegende Erfindung Pipettiervorrichtungen mit solchen Pipettenspitzen, Verfahren zum Bestimmen des Volumens einer Probenflüssigkeit in solchen Pipettenspitzen, Verfahren zum Erkennen solcher Pipettenspitzen an einer

Pipettiervorrichtung, Verfahren zur Herstellung solcher Pipettenspitzen, Verwendungen solcher Pipettenspitzen sowie einen Satz solcher Pipettenspitzen.

### HINTERGRUND DER ERFINDUNG

Wenn in medizinischen, chemischen, analytischen oder pharmazeutischen Labors grosse Mengen an Proben zu untersuchen sind, werden dazu heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt. Solche Flüssigkeitsbearbeitungssysteme umfassen insbesondere Pipettierer sowohl zum Ansaugen und Abgeben von Flüssigkeiten oder Dispenser ausschliesslich zum Abgeben von Flüssigkeiten. Die meisten Laboranwendungen erfordern sehr präzise Pipettieroperationen um eine zufriedenstellende analytische Genauigkeit zu erhalten. Folglich ist eine genaue Kenntnis der verarbeiteten Probenmengen bzw. Flüssigkeitsvolumina von entscheidender Bedeutung.

In der Schweizer Patentanmeldung CH 00950/16 mit Anmeldetag 22. Juli 2016 werden ein Verfahren, welches eine genaue Bestimmung eines bearbeiteten (d.h. aspirierten bzw. dispensierten) Flüssigkeitsvolumens beim Pipettieren erlaubt, sowie eine Pipettiervorrichtung, welche dieses Verfahren für eine präzise Bestimmung der verarbeiteten Probenmengen bzw. Flüssigkeitsvolumina einsetzt, vorgeschlagen.

Bei vielen Anwendungen wird für die Handhabung jeder neuen Probe eine frische Pipettenspitze verwendet. Solche Pipettenspitzen sind daher für den einmaligen Gebrauch ausgelegt und werden meist als "Wegwerf-Pipettenspitzen" oder Englisch als "disposable tips" bezeichnet (abgekürzt auch "DiTis" genannt). Je nach Anwendung werden beim Pipettieren unterschiedliche Pipettenspitzen eingesetzt. Es ist daher wichtig, dass bei einer automatisierten Pipettiervorrichtung, diese in der Lage ist zu erkennen, ob überhaupt eine Pipettenspitze an der Pipettenröhre angeschlossen ist, und insbesondere ob die korrekte Pipettenspitze angeschlossen ist.

In der Schweizer Patentanmeldung CH 00159/17 mit Anmeldetag 10. Februar 2017 werden ein Verfahren, welches die Erkennung einer Pipettenspitze an einer Pipettiervorrichtung erlaubt, sowie eine Pipettiervorrichtung, welche mittels dieses Verfahrens automatisch verschiedene Pipettenspitzen erkennen kann, vorgeschlagen.

Es besteht somit der Bedarf geeignete Pipettenspitzen bereitzustellen, welche in den genannten Verfahren zum Bestimmen des Volumens einer Probenflüssigkeit in einer solchen Pipettenspitze und zum Erkennen solcher Pipettenspitzen an einer Pipettiervorrichtung eingesetzt werden können.

Die US 2005/0279855 A1 beschreibt eine Vorrichtung zum Bestimmen des Flüssigkeitsvolumens in einer Pipettenspitze mit zwei Elektroden, welche auf gegenüberliegenden Seiten der Pipettenspitze angeordnet sind, wobei die beiden Elektroden und die Flüssigkeit einen variablen Kondensator bilden. Die Vorrichtung kann mit einer Flüssigkeit verwendet werden, die eine bekannte oder unbekannte Dielektrizitätskonstante aufweist, und kann auch verwendet werden, um das Vorhandensein von Blasen in der Flüssigkeit zu bestimmen.

### ZUSAMMENFASSUNG DER ERFINDUNG

Es ist daher eine Aufgabe der vorliegenden Erfindung eine Pipettenspitze zum Anschliessen an eine Pipettenröhre von einer Pipettiervorrichtung bereitzustellen, mit deren Hilfe eine präzise Bestimmung des Volumens einer Probenflüssigkeit in der Pipettenspitze ermöglicht wird. Diese Aufgabe wird erfindungsgemäss durch die in Anspruch 1 festgelegte Pipettenspitze erfüllt.

Es ist eine weitere Aufgabe der vorliegenden Erfindung eine Pipettiervorrichtung mit einer Pipettenröhre zum fluiddichten Anschliessen einer vorgeschlagenen Pipettenspitze an ihrem einen Ende bereitzustellen, mit deren Hilfe eine präzise Bestimmung der verarbeiteten Probenmengen bzw. Flüssigkeitsvolumina ermöglicht wird. Diese Aufgabe wird erfindungsgemäss durch die in Anspruch 11 festgelegte Pipettiervorrichtung erfüllt.

Es ist eine weitere Aufgabe der vorliegenden Erfindung ein Verfahren bereitzustellen, welches eine genaue Bestimmung des Volumens einer Probenflüssigkeit in einer vorgeschlagenen Pipettenspitze ermöglicht. Diese Aufgabe wird erfindungsgemäss durch das in Anspruch 14 vorgeschlagene Bestimmungsverfahren gelöst.

Es ist eine weitere Aufgabe der vorliegenden Erfindung ein Verfahren bereitzustellen, welches die Erkennung einer vorgeschlagenen Pipettenspitze an einer Pipettiervorrichtung ermöglicht. Diese Aufgabe wird erfindungsgemäss durch das in Anspruch 16 vorgeschlagene Erkennungsverfahren gelöst.

Es ist eine weitere Aufgabe der vorliegenden Erfindung eine Verwendung einer vorgeschlagenen Pipettenspitze anzugeben. Eine solche erfindungsgemässe Verwendung ist in Anspruch 17 angegeben.

Ferner ist es eine Aufgabe der vorliegenden Erfindung einen Satz von Pipettenspitzen, welche für den Einsatz mit dem vorgeschlagenen Erkennungsverfahren geeignet sind, bereitzustellen. Ein solcher erfindungsgemässer Satz von Pipettenspitzen wird in Anspruch 19 aufgeführt.

Spezifische erfindungsgemässe Ausführungsvarianten werden in den abhängigen Ansprüchen angegeben.

Eine erfindungsgemässe Pipettenspitze ist zum Anschliessen an eine Pipettenröhre von einer Pipettiervorrichtung vorgesehen und als langgestreckte Röhre geformt, welche einen Pipettenkörper bildet, der an seinem einen, ersten Ende eine Öffnung zum Aspirieren und/oder Dispensieren von Flüssigkeiten aufweist, und an seinem anderen Ende zum (fluiddichten) Anschliessen an die Pipettenröhre ausgebildet ist, wobei die Pipettenspitze eine erste Elektrode als Volumenmesselektrode eines Messkondensators, welcher ferner zumindest einen Teil einer in der Pipettenspitze aufnehmbaren Probenflüssigkeit als Gegenelektrode umfasst, aufweist. Die erste Elektrode ist streifenförmig ausgebildet und verläuft axial entlang der Pipettenspitze. Des Weiteren ist die erste Elektrode abschnittsweise unterschiedlich breit, wobei sie ein treppenstufenförmiges Breitenprofil in axialer Richtung aufweist, wobei die Breite z.B. am ersten Ende am geringsten ist und in axialer Richtung stufenweise grösser wird.

In einer Ausführungsvariante der Pipettenspitze befindet sich die erste Elektrode auf einer äusseren Oberfläche des Pipettenkörpers oder ist im Pipettenkörper eingebettet.

In einer weiteren Ausführungsvariante ist die Pipettenspitze mit einer Beschichtung überzogen, welche insbesondere die erste Elektrode abdeckt.

In einer weiteren Ausführungsvariante der Pipettenspitze ist der Pipettenkörper konisch oder pyramidenförmig.

In einer weiteren Ausführungsvariante der Pipettenspitze besteht der Pipettenkörper aus einem elektrisch nichtleitenden Material, insbesondere einem nichtleitenden Kunststoff, wie beispielsweise nichtleitendes Polypropylen, welches insbesondere zumindest als Teil eines Dielektrikums des Messkondensators wirkt.

In einer weiteren Ausführungsvariante der Pipettenspitze besteht die erste Elektrode aus einem leitenden Kunststoff, wie beispielsweise leitendes Polypropylen. Die erste Elektrode kann aber auch aus Metall sein, wie z.B. aus Kupfer oder Silber.

In einer weiteren Ausführungsvariante der Pipettenspitze erstreckt sich die erste Elektrode nicht bis zur Öffnung am ersten Ende und ist insbesondere von dieser Öffnung beabstandet in einem Bereich von 3 mm bis 6 mm, bevorzugt im Bereich von 4.5 mm bis 5.5 mm, besonders bevorzugt um 5 mm.

In einer weiteren Ausführungsvariante der Pipettenspitze weist der Pipettenkörper am ersten Ende eine leitende Spitze mit der Öffnung zum Aspirieren und/oder Dispensieren von Flüssigkeiten als Eintauchdetektionselektrode auf, wobei die leitende Spitze insbesondere eine Länge in einem Bereich von 3 mm bis 6 mm, bevorzugt im Bereich von 4.5 mm bis 5.5 mm, besonders bevorzugt von 5 mm, und weiter insbesondere aus demselben Material besteht wie die erste Elektrode.

In einer weiteren Ausführungsvariante der Pipettenspitze erstreckt sich die erste Elektrode nicht bis zur leitenden Spitze (bzw. ist mit dieser nicht galvanisch verbunden) und ist insbesondere um mindestens 0.3 mm von der leitenden Spitze beabstandet.

In einer weiteren Ausführungsvariante der Pipettenspitze weist die Pipettenspitze eine zweite Elektrode als Eintauchdetektionselektrode auf, welche insbesondere im Wesentlichen gegenüber der ersten Elektrode angeordnet ist, und welche weiter insbesondere aus demselben Material besteht wie die erste Elektrode.

In einer weiteren Ausführungsvariante der Pipettenspitze befindet sich die zweite Elektrode auf einer inneren und/oder äusseren Oberfläche des Pipettenkörpers oder bildet einen durchgehenden Teil einer Wand des Pipettenkörpers, wodurch ein direkter Kontakt mit einer umgebenden Probenflüssigkeit (d.h. innerhalb und/oder ausserhalb der Pipettenspitze) ermöglicht wird.

In einer weiteren Ausführungsvariante der Pipettenspitze ist die zweite Elektrode streifenförmig ausgebildet und verläuft axial entlang der Röhre, und umspannt insbesondere bis zu zwei Dritteln des Umfangs der Pipettenspitze, weiter insbesondere umspannt die Hälfte des Umfangs der Pipettenspitze.

In einer weiteren Ausführungsvariante der Pipettenspitze erstreckt sich die zweite Elektrode bis zur Öffnung am ersten Ende.

In einer weiteren Ausführungsvariante ist die Pipettenspitze eine Wegwerf-Pipettenspitze, welche insbesondere zum einmaligen Gebrauch vorgesehen ist.

Gemäss einem weiteren Aspekt umfasst die vorliegende Erfindung eine Pipettiervorrichtung gemäß Anspruch 11.

In einer Ausführungsvariante der Pipettiervorrichtung ist die (Kapazitäts-)Messeinheit weiter ausgebildet, um mit Hilfe einer leitenden Spitze an der Pipettenspitze und/oder einer zweiten Elektrode an der Pipettenspitze als Eintauchdetektionselektrode (bzw. als Eintauchkontakt) ein Eintauchen der Pipettenspitze in die Probenflüssigkeit zu detektieren.

In einer weiteren Ausführungsvariante umfasst die Pipettiervorrichtung weiter eine Detektionseinheit zum Erkennen ob die Pipettenspitze am ersten Ende der Pipettenröhre angeschlossen ist, und/oder zum Erkennen eines charakteristischen Merkmals der Pipettenspitze basierend auf einer Messung einer weiteren Kapazität, wobei die weitere Kapazität abhängig ist von einem oder mehreren der folgenden Eigenschaften:
- einem Material aus dem die Pipettenspitze besteht;
- einer Geometrie der Pipettenspitze, insbesondere einer Form der Pipettenspitze, weiter insbesondere einem Durchmesser und/oder einer Länge der Pipettenspitze;
- einer Beschichtung der Pipettenspitze, insbesondere einem Material aus dem die Beschichtung der Pipettenspitze besteht, weiter insbesondere einer Ausdehnung oder Dicke der Beschichtung der Pipettenspitze;
- einem Material aus dem die erste und/oder zweite Elektrode und/oder die leitende Spitze besteht;
- einer Geometrie (wie z.B. einer Länge, Breite, Dicke oder Fläche) der ersten und/oder zweiten Elektrode und/oder der leitenden Spitze.

Gemäss einem weiteren Aspekt der vorliegenden Erfindung umfasst ein Verfahren zum Bestimmen eines Volumens einer Probenflüssigkeit in einer vorgeschlagenen Pipettenspitze folgende Schritte (= Bestimmungsverfahren):
- Messen einer Kapazität eines Messkondensators umfassend eine erste Elektrode an der Pipettenspitze und eine Gegenelektrode, die durch mindestens einen Teil einer Probenflüssigkeit, welche sich in der Pipettenspitze befindet, gebildet wird;
- Bestimmen des Volumens der Probenflüssigkeit in der Pipettenspitze in Abhängigkeit der gemessenen Kapazität.

In einer Ausführungsvariante umfasst das
Bestimmungsverfahren weiter den Schritt:
- Detektieren eines Eintauchens der Pipettenspitze in die Probenflüssigkeit mit Hilfe einer leitenden Spitze an der Pipettenspitze und/oder einer zweiten Elektrode an der Pipettenspitze als Eintauchdetektionselektrode (bzw. als Eintauchkontakt).

Gemäss einem weiteren Aspekt der vorliegenden Erfindung umfasst ein Verfahren zum Erkennen (= Erkennungsverfahren) einer vorgeschlagenen Pipettenspitze an einer Pipettiervorrichtung mit einer Pipettenröhre, die an ihrem einen, ersten Ende zum lösbaren Aufnehmen einer Pipettenspitze zum Aspirieren bzw. Dispensieren einer Flüssigkeit ausgebildet ist, und die an ihrem anderen Ende mit einem Druckerzeugungsmittel wirkverbunden ist, wobei das Verfahren ein Messen einer Kapazität umfasst, die abhängig ist von einem oder mehreren der folgenden Eigenschaften:
- einem Material aus dem die Pipettenspitze besteht;
- einer Geometrie der Pipettenspitze, insbesondere einer Form der Pipettenspitze, weiter insbesondere einem Durchmesser und/oder einer Länge der Pipettenspitze;
- einer Beschichtung der Pipettenspitze, insbesondere einem Material aus dem die Beschichtung der Pipettenspitze besteht, weiter insbesondere einer Ausdehnung oder Dicke der Beschichtung der Pipettenspitze;
- einem Material aus dem die erste und/oder zweite Elektrode und/oder die leitende Spitze besteht;
- einer Geometrie (wie z.B. einer Länge, Breite, Dicke oder Fläche) der ersten und/oder zweiten Elektrode und/oder der leitenden Spitze.

Ein nicht erfindungsgemässes Verfahren zur Herstellung (= Herstellungsverfahren) einer vorgeschlagenen Pipettenspitze umfasst z.B. das Formen der Pipettenspitze als langgestreckte Röhre aus einem ersten Material und das Formen einer ersten Elektrode aus einem zweiten Material an der Pipettenspitze, insbesondere auf einer äusseren Oberfläche der Röhre oder eingebettet in der Röhre, wobei dies mittels eines Mehrkomponentenspritzgussverfahrens erfolgt.

In einer Ausführungsvariante umfasst das
Herstellungsverfahren ferner das Anbringen einer leitenden Spitze am ersten Ende der Röhre und/oder das Formen einer zweiten Elektrode an der Pipettenspitze, insbesondere auf einer inneren und/oder äusseren Oberfläche der Röhre oder als einen durchgehenden Teil einer Wand der Röhre, wobei dies mittels desselben Mehrkomponentenspritzgussverfahrens, und insbesondere gleichzeitig mit dem Formen der ersten Elektrode, erfolgt.

Gemäss einem weiteren Aspekt der vorliegenden Erfindung ist eine Verwendung der vorgeschlagenen Pipettenspitze zum Bestimmen eines Volumens einer Probenflüssigkeit, welche sich in der Pipettenspitze befindet, mit Hilfe einer ersten Elektrode als Volumenmesselektrode an der Pipettenspitze vorgesehen.

In einer Ausführungsvariante ist die Verwendung der vorgeschlagenen Pipettenspitze zum Detektieren eines Eintauchens der Pipettenspitze in die Probenflüssigkeit mit Hilfe einer leitenden Spitze und/oder einer zweiten Elektrode als Eintauchdetektionselektrode an der Pipettenspitze vorgesehen.

Gemäss einem weiteren Aspekt der vorliegenden Erfindung umfasst ein Satz von vorgeschlagenen Pipettenspitzen mindestens zwei Typen von Pipettenspitzen, wobei sich die mindestens zwei Typen darin unterscheiden, dass beim Anwenden des vorgeschlagenen Verfahrens zum Erkennen einer Pipettenspitze eine Kapazität eines ersten Typs von Pipettenspitzen in einem ersten Bereich liegt und die Kapazität eines zweiten Typs von Pipettenspitzen in einem zweiten Bereich liegt, wobei der erste und zweite Bereich nicht überlappend sind, und wobei sich die mindestens zwei Typen insbesondere durch eines der folgenden Merkmale unterscheiden:
- Fassungsvolumen;
- Spitzenöffnungsgrösse/-durchmesser zum Aspirieren und Dispensieren einer Flüssigkeit;
- mit oder ohne Filter zur Verhinderung von Kontaminationen der Pipettenröhre beim Aspirieren einer Probe, sowie insbesondere eine Art des Filters;
- Reinheitskategorie;
- Verwendungszweck;
- Volumenmessfunktion;
- Dichtungsvermögen eines Anschlusses der Pipettenspitzen an die Pipettenröhre,
und wobei insbesondere die äussere Geometrie der mindestens zwei Typen identisch sein kann.

Es sei angemerkt, dass Kombinationen der oben genannten Ausführungsvarianten möglich sind, die wiederum zu spezifischeren Ausführungsvarianten der vorliegenden Erfindung führen.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
Fig. 1
   a) eine schematische Darstellung eines ersten nicht erfindungsgemässen Ausführungsbeispiels einer Pipettenspitze mit einer streifenförmigen Volumenmesselektrode in einer Ansicht von der Seite;
   b) eine schematische Darstellung des ersten Ausführungsbeispiels einer Pipettenspitze in einer Querschnittsansicht von oben;
   c) eine schematische Darstellung des ersten Ausführungsbeispiels einer Pipettenspitze in einer Ansicht von vorne (auf die Volumenmesselektrode);
   d) eine schematische Darstellung eines zweiten erfindungsgemässen Ausführungsbeispiels einer Pipettenspitze mit einer treppenstufenförmigen Volumenmesselektrode in einer Ansicht von vorne;
   e) eine schematische Darstellung eines dritten nicht erfindungsgemässen Ausführungsbeispiels einer Pipettenspitze mit einer Beschichtung über der Volumenmesselektrode in einer Querschnittsansicht von oben;
Fig. 2
   a) eine schematische Darstellung eines vierten nicht erfindungsgemässen Ausführungsbeispiels einer Pipettenspitze mit einer im Pipettenkörper eingebetteten Volumenmesselektrode in einer Ansicht von der Seite;
   b) eine schematische Darstellung des vierten Ausführungsbeispiels einer Pipettenspitze in einer Querschnittsansicht von oben;

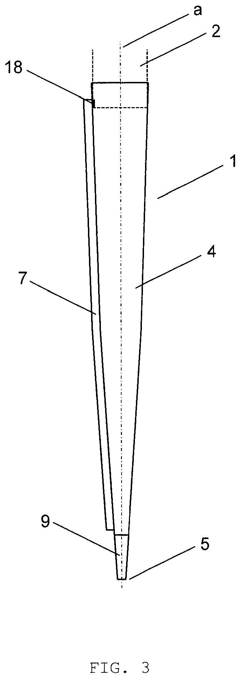

Fig. 3 eine schematische Darstellung eines fünften nicht erfindungsgemässen Ausführungsbeispiels einer Pipettenspitze mit einer leitenden Spitze in einer Ansicht von der Seite;
Fig. 4
   a) eine schematische Darstellung eines sechsten nicht erfindungsgemässen Ausführungsbeispiels einer Pipettenspitze mit einer Eintauchdetektionselektrode auf der äusseren Oberfläche des Pipettenkörpers in einer Ansicht von der Seite;
   b) eine schematische Darstellung des sechsten Ausführungsbeispiels einer Pipettenspitze in einer Querschnittsansicht von oben;
   c) eine schematische Darstellung eines siebten nicht erfindungsgemässen Ausführungsbeispiels einer Pipettenspitze mit einer Eintauchdetektionselektrode auf der inneren Oberfläche des Pipettenkörpers in einer Querschnittsansicht von oben;
   d) eine schematische Darstellung eines nicht erfindungsgemässen Ausführungsbeispiels einer Pipettenspitze mit einer Eintauchdetektionselektrode, die einen durchgehenden Teil der Wand des Pipettenkörpers bildet, in einer Querschnittsansicht von oben;
Fig. 5
   a) eine schematische Darstellung eines nicht erfindungsgemässen Eintauch- und Austauchvorgangs des sechsten Ausführungsbeispiels einer Pipettenspitze bei einem Behälter mit einer Probenflüssigkeit;
   b) ein beispielhafter zeitlicher Verlauf der Kapazität eines Messkondensators mit Signalsprüngen beim Eintauchen und Austauchen der Pipettenspitze in bzw. aus der Probenflüssigkeit;
Fig. 6
   a) eine schematische Darstellung eines Aspirations-und Dispensationsvorgangs des nicht erfindungsgemässen sechsten Ausführungsbeispiels einer Pipettenspitze beim Behälter mit der Probenflüssigkeit;
   b) ein beispielhafter zeitlicher Verlauf der Kapazität eines Messkondensators mit einem linearen Signalanstieg und -abfall beim Aspirieren und Dispensieren von der Probenflüssigkeit mit der Pipettenspitze;
Fig. 7 eine schematische Darstellung eines Ausführungsbeispiels einer erfindungsgemässen Pipettiervorrichtung bzw. eines erfindungsgemässen Flüssigkeitsbearbeitungssystems; und
Fig. 8 eine schematische Darstellung von drei beispielhaften Pipettenspitzen a), b) & c) mit unterschiedlich breiten Elektroden, welche einen nicht erfindungsgemässen Satz von drei unterscheidbaren Typen von Pipettenspitzen bilden.

In den Figuren stehen gleiche Bezugszeichen für gleiche Elemente.

### DETAILLIERTE BESCHREIBUNG DER ERFINDUNG

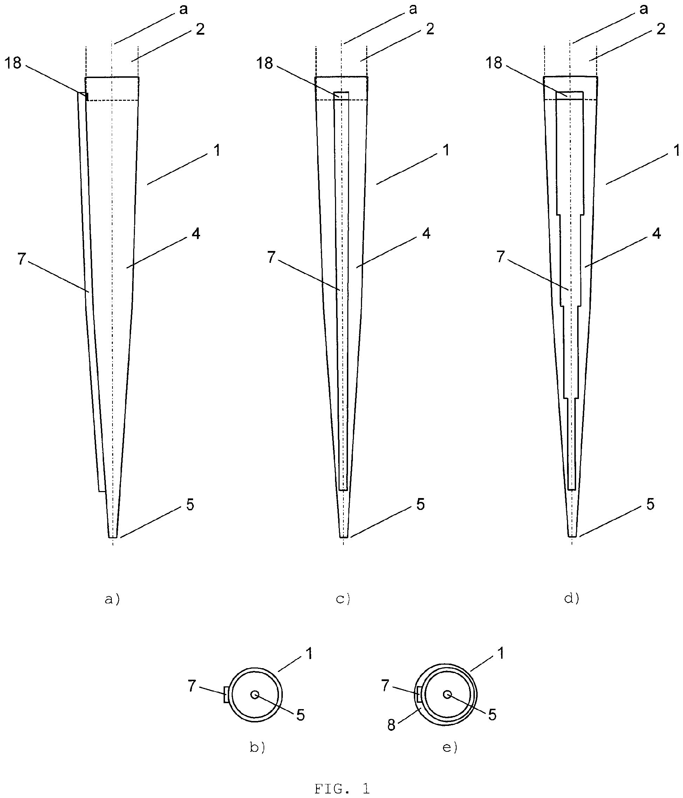

Nur das Ausführungsbeispiel in Fig. 1d) stellt ein erfindungsgemässes Ausführungsbeispiel dar, weil nur dieses Ausführungsbeispiel eine Elektrode mit einem treppenstufenförmigen Breitenprofil in axialer Richtung der Pipettenspitze aufweist. Die anderen Ausführungsbeispiele enthalten dieses Merkmal nicht, und beziehen sich daher auf nicht erfindungsgemässe Ausführungsbeispiele.

In Fig. 1a) wird in einer schematischen Darstellung ein erstes Ausführungsbeispiel einer Pipettenspitze 1 mit einer streifenförmigen Volumenmesselektrode 7 in einer Ansicht von der Seite gezeigt. Die langgestreckte Röhre, welche den Pipettenkörper 4 bildet, weist eine im Wesentlichen konische Form auf. Der Pipettenkörper 4 könnte aber z.B auch pyramidenförmig sein. An seinem einen, ersten Ende weist der Pipettenkörper 4 eine Öffnung 5 zum Aspirieren und/oder Dispensieren von Flüssigkeiten auf. Das andere Ende ist zum fluiddichten Anschliessen an die Pipettenröhre 2 ausgebildet, wobei die Pipettenröhre 2 dazu beispielsweise einen Konus als Adapter aufweist. Die Volumenmesselektrode 7 wirkt als eine erste Elektrode eines Messkondensators, welcher ferner zumindest einen Teil einer in der Pipettenspitze 1 aufnehmbaren Probenflüssigkeit als Gegenelektrode umfasst. Dabei bildet der Pipettenkörper 4 das Dielektrikum dieses Messkondensators. Die Volumenmesselektrode 7 ist hier als schmaler Streifen auf der äusseren Oberfläche des Pipettenkörpers 4 angeordnet und verläuft axial entlang der Pipettenspitze 1 (mit zentralen Achse a). Die Volumenmesselektrode 7 weist z.B. eine Breite in einem Bereich von 0.8 mm bis 5 mm, bevorzugt im Bereich von 0.8 mm bis 2 mm, besonders bevorzugt von 1 mm, auf. An ihrem oberen Ende weist die Volumenmesselektrode 7 einen elektrischen Kontakt 18 auf, mittels dem die Volumenmesselektrode 7 mit der Pipettenröhre 2 galvanisch verbunden wird. Die Fig. 1b) zeigt dieses erste Ausführungsbeispiel der Pipettenspitze 1 in einer Querschnittsansicht von oben, und in Fig. 1c) in einer Ansicht von vorne auf die Volumenmesselektrode 7.

In Fig. 1d) wird in einer schematischen Darstellung ein zweites Ausführungsbeispiel einer Pipettenspitze 1 mit einer treppenstufenförmigen Volumenmesselektrode 7 in einer Ansicht von vorne gezeigt. Bei Verwendung einer solchen Volumenmesselektrode 7 treten jeweils Kapazitätssprünge (in der Volumenkennlinie, d.h. des Volumens der Probenflüssigkeit in der Pipettenspitze 1 in Abhängigkeit von der gemessenen Kapazität) auf, wenn der Füllstand der Pipettenspitze 1 eine der Treppenstufen der Volumenmesselektrode 7 überschreitet. So kann z.B. der Füllstand bzw. das Volumen der Probenflüssigkeit in der Pipettenspitze 1 weitgehend unabhängig von der Leitfähigkeit der Probenflüssigkeit mindesten grob ermittelt werden, z.B. in Stufen von 1/4-, 1/2-, 3/4-, 4/4-voll (oder auch feiner wie in Zehnteln).

Die Fig. 1e) zeigt ein drittes Ausführungsbeispiel der Pipettenspitze 1 in einer Querschnittsansicht von oben mit einer Beschichtung 8 über der Volumenmesselektrode 7 sowie über dem restlichen Pipettenkörper 4 (d.h. über der äusseren Oberfläche der Pipettenspitze 1). Diese Beschichtung 8 kann beispielsweise nur in einem Bereich der Volumenmesselektrode 7 vorhanden sein, z.B. um zu verhindern, dass die Volumenmesselektrode 7 mit der Probenflüssigkeit in Berührung kommt, wenn die Pipettenspitze 1 zu weit in die Probenflüssigkeit abgesenkt wird. Andererseits kann die gesamte Pipettenspitze 1 mit einer Beschichtung 8 überzogen sein, wie z.B. mit einer hydrophoben, oleophoben oder antibakteriellen Beschichtung 8.

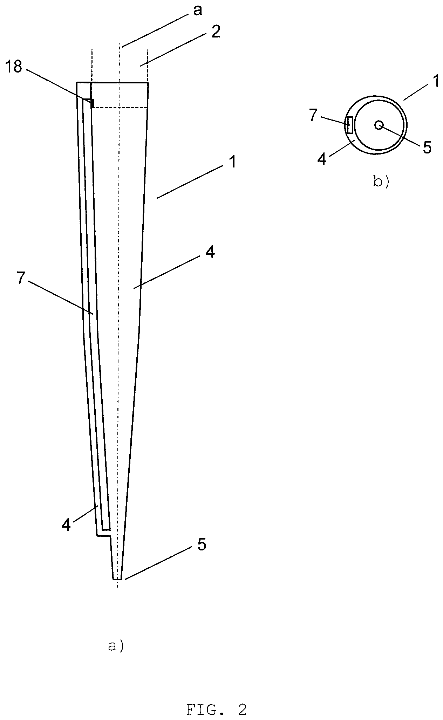

In Fig. 2a) ist in einer schematischen Darstellung ein viertes Ausführungsbeispiel einer Pipettenspitze 1 mit einer im Pipettenkörper 4 eingebetteten Volumenmesselektrode 7 in einer Ansicht von der Seite gezeigt. Die Volumenelektrode 7 kann sich dabei fast bis zur Öffnung 5 erstrecken. Dieselbe Pipettenspitze 1 ist in Fig. 2b) in einer Ansicht von oben dargestellt. Dabei ist die Volumenmesselektrode 7 allseitig vom Material des Pipettenkörpers 4 umhüllt und darin eingeschlossen.

Die Fig. 3 zeigt in einer schematischen Darstellung ein fünftes Ausführungsbeispiel einer Pipettenspitze 1 in einer Ansicht von der Seite, welche im Unterschied zum ersten Ausführungsbeispiel eine leitende Spitze 9 mit der Öffnung 5 zum Aspirieren und Dispensieren der Probenflüssigkeit aufweist. Diese leitende Spitze dient als Eintauchdetektionselektrode (bzw. -kontakt), mit deren Hilfe festgestellt werden kann, wann die Pipettenspitze 1 die Oberfläche der Probenflüssigkeit berührt bzw. durchstösst und in diese eintaucht (-> "capacitive liquid level detection", cLLD). Die leitende Spitze 9 hat beispielsweise eine Länge in einem Bereich von 3 mm bis 6 mm, bevorzugt im Bereich von 4.5 mm bis 5.5 mm, besonders bevorzugt von 5 mm, und besteht z.B. aus demselben Material wie die Volumenmesselektrode 7.

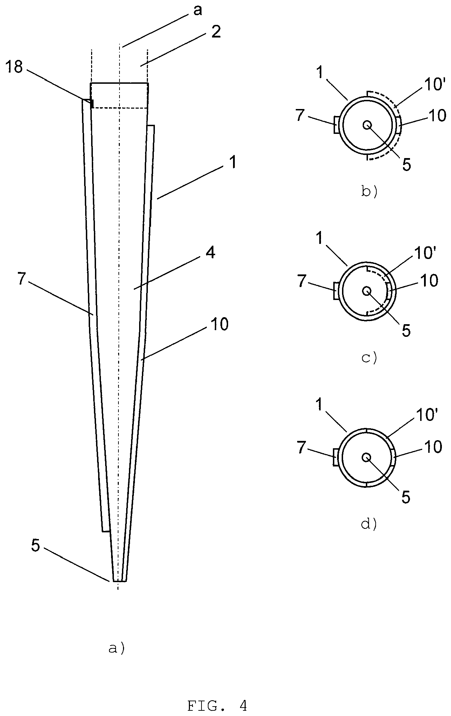

Die Fig. 4a) zeigt in einer schematischen Darstellung ein sechstes Ausführungsbeispiel einer Pipettenspitze 1, welche zusätzlich zur Volumenmesselektrode 7 eine zweite Elektrode als Eintauchdetektionselektrode (bzw. -kontakt) 10 aufweist. Mit Hilfe dieser Eintauchdetektionselektrode 10 kann (wie mit der leitenden Spitze 9) festgestellt werden, wann die Pipettenspitze 1 die Oberfläche der Probenflüssigkeit berührt bzw. durchstösst und in diese eintaucht (-> cLLD). Die Eintauchdetektionselektrode 10 ist im Wesentlichen gegenüber der Volumenmesselektrode 7 angeordnet und besteht z.B. aus demselben Material wie die erste Elektrode 7. Wie dies in den Fig. 4b), 4c) und 4d) gezeigt wird, kann die Eintauchdetektionselektrode 10 auf einer äusseren (= sechstes Ausführungsbeispiel) oder inneren (= siebtes Ausführungsbeispiel) Oberfläche des Pipettenkörpers 4 angeordnet sein (oder auch auf beiden Oberflächen verbunden bei der Öffnung 5) oder einen durchgehenden Teil einer Wand des Pipettenkörpers 4 bilden (= achtes Ausführungsbeispiel). Wie aus den Fig. 4b), 4c) und 4d) ebenfalls hervorgeht, kann die Eintauchdetektionselektrode 10 streifenförmig ausgebildet sein und axial entlang des Pipettenkörpers 4 verlaufen sowie z.B. die Hälfte des Umfangs der Pipettenspitze 1 umspannen. Weiter erstreckt sich die Eintauchdetektionselektrode 10 bis zur Öffnung 5 damit sie beim Eintauchen in die Probenflüssigkeit mit dieser in Kontakt kommt. Im Gegensatz dazu darf die Volumenmesselektrode 7 nicht mit der Probenflüssigkeit in Kontakt treten, sodass sich diese z.B. nicht bis zur Öffnung 5 erstreckt und von dieser beabstandet ist, wie in Fig. 4a) gezeigt.

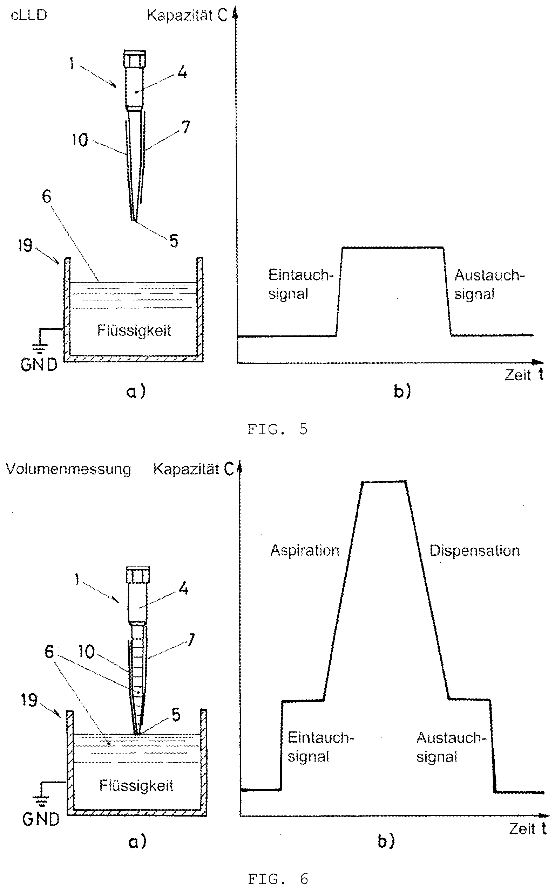

Fig. 5a) illustriert in einer schematischen Darstellung eine Verwendung der Pipettenspitze 1 gemäss dem sechsten Ausführungsbeispiel zur Eintauchdetektion (-> cLLD), d.h. zur Bestimmung des Zeitpunkts wann die Pipettenspitze 1 in eine Probenflüssigkeit 6, welche sich in einem Behälter 19, wie z.B. einer Wanne, einem Probenröhrchen oder einem "Well" in einer Mikroplatte befindet, eintaucht (und austaucht). Wie aus dem zeitlichen Verlauf der gemessenen Kapazität in der Fig. 5b) hervorgeht, steigt die Kapazität sprunghaft an sobald die Eintauchdetektionselektrode 10 die Probenflüssigkeit 6 berührt und in diese eintaucht, und fällt dann wieder schlagartig ab, sobald die Eintauchdetektionselektrode 10 aus der Probenflüssigkeit 6 herausgezogen wird.

Fig. 6a) illustriert die Verwendung der Pipettenspitze 1 gemäss dem sechsten Ausführungsbeispiel zur Messung des Volumens der Probenflüssigkeit 6, welche sich in der Pipettenspitze 1 beim Aspirieren und Dispensieren befindet. Wie aus dem zeitlichen Verlauf der gemessenen Kapazität in der Fig. 6b) hervorgeht, steigt die Kapazität sprunghaft an sobald die Eintauchdetektionselektrode 10 die Probenflüssigkeit 6 berührt und in diese eintaucht, steigt dann linear an (abhängig von der Form der Pipettenspitze 1 und der Geometrie der Volumenmesselektrode 7) aufgrund der immer höheren Probenflüssigkeitssäule in der Pipettenspitze 1, welche eine immer grösser werdende Gegenelektrode zur Volumenmesselektrode 7 bildet, fällt dann linear ab beim Dispensieren und macht schliesslich wieder einen Sprung runter, sobald die Eintauchdetektionselektrode 10 aus der Probenflüssigkeit 6 herausgezogen wird.

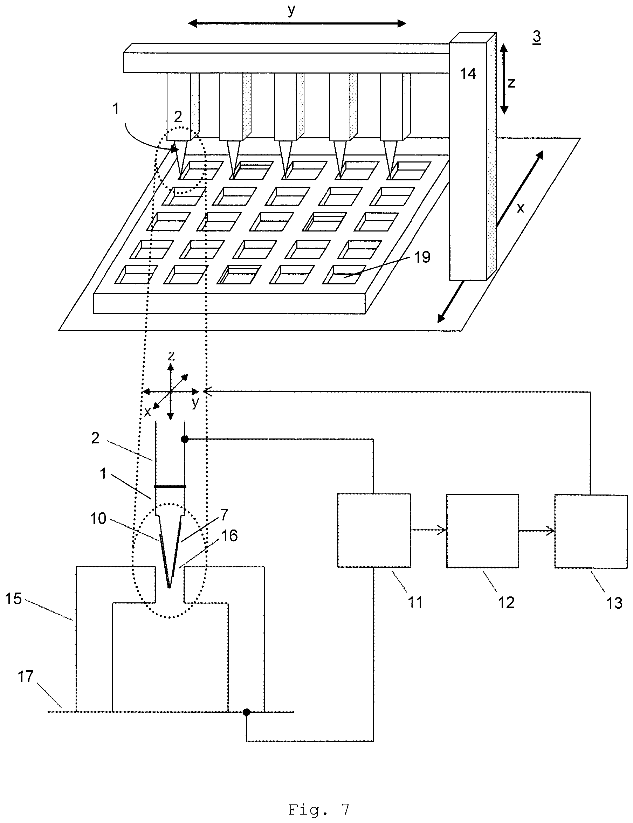

Fig. 7 illustriert in einer vereinfachten schematischen Darstellung ein Ausführungsbeispiel einer erfindungsgemässen Pipettiervorrichtung. Diese Abbildung zeigt die Pipettenröhre 2 mit einer aufgesetzten Pipettenspitze 1, welche zuvor aus einer Aufnahme 16 einer Pipettenspitzenhalterung 15 entnommen wurde und nun von einem Roboterarm 14 an einem Flüssigkeitsbearbeitungssystem 3 vertikal nach oben bewegt und damit von der Pipettenspitzenhalterung 15 entfernt wird. Dabei kann eine Kapazitätsmesseinheit 11, welche mit der Pipettenröhre 2 und damit auch mit der Pipettenspitze 1 als erste Elektrode und mit dem Arbeitstisch bzw. der Arbeitsfläche 17 und damit auch mit der Pipettenspitzenhalterung 15 (oder einem Bestandteil davon) als zweite (Gegen-)Elektrode verbunden ist, die (absolute) Kapazität des diese beiden Elektroden umfassenden Messkondensators bestimmen. Je nach Typ oder Art (z.B. Grösse/Fassungsvolumen) der Pipettenspitze 1 wird der gemessene Wert der Kapazität unterschiedlich sein. Dazu wird der gemessene Wert der Kapazität in einer Detektionseinheit 12 mit verschiedenen Referenzwerten verglichen, wobei jeder Referenzwert charakteristisch ist für einen bestimmten Typ oder eine bestimmte Art von Pipettenspitze 1. Die Detektionseinheit 12 gibt dann eine Information darüber, ob eine Pipettenspitze 1 an der Pipettenröhre 2 angeschlossen ist, und falls ja um welchen Typ oder Art von Pipettenspitze 1 es sich handelt, an eine Steuerungseinheit 13 eines Antriebs für den Roboterarm 14 weiter.

Eine solche Pipettenspitzenhalterung 15 kann beispielsweise auch Teil des Flüssigkeitsbearbeitungssystems 3 sein, wobei der Roboterarm 14 zur Bestimmung der Kapazität und damit zur Detektion des Pipettenspitzentyps bzw. der Pipettenspitzengrösse die Pipettenröhre 2 mit angeschlossener Pipettenspitze 1 jeweils zur Pipettenspitzenhalterung 15 hinbewegt und zur Kapazitätsmessung in die Aufnahme 16 absenkt. So stellt die Pipettenspitzenhalterung 15 eine separate/dedizierte "Messstation" zur Pipettenspitzenerkennung innerhalb des Flüssigkeitsbearbeitungssystems 3 dar.

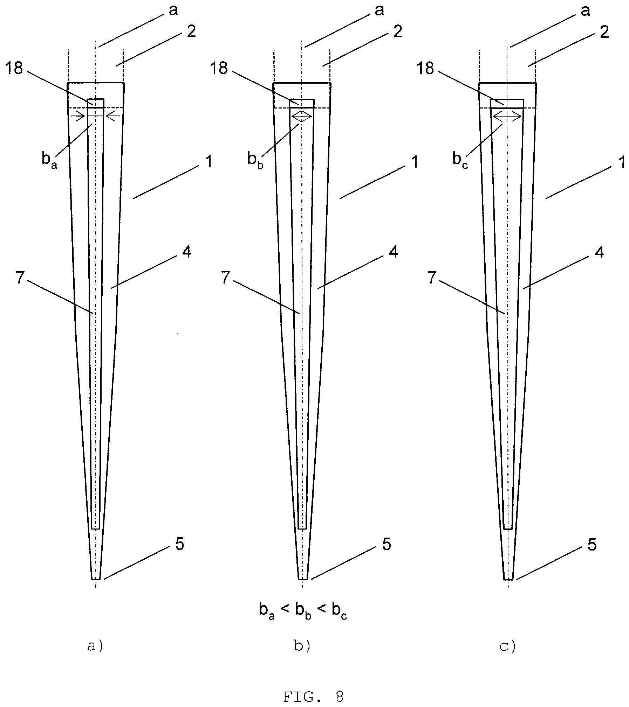

Schliesslich zeigen die Fig. 8a)-c) in schematischer Darstellung beispielhaft drei Pipettenspitzen 1 mit unterschiedlich breiten Elektroden 7 (oder 10), welche einen Satz von drei unterscheidbaren Typen von Pipettenspitzen 1 bilden, welche mittels des vorgeschlagenen Erkennungsverfahrens basierend auf den unterschiedlichen Kapazitäten, welche sich aufgrund der verschiedenen Breiten bₐ < b_{b} < b_{c} der Elektroden 7 (oder 10) ergeben, voneinander unterschieden und erkannt werden können.

### LISTE DER BEZUGSZEICHEN

- 1: Pipettenspitze
- 2: Pipettenröhre
- 3: Pipettiervorrichtung
- 4: Pipettenkörper
- 5: Öffnung am einen, ersten Ende des Pipettenkörpers
- 6: (Proben-)Flüssigkeit
- 7: erste Elektrode, Volumenmesselektrode
- 8: elektrisch isolierende Schicht/Beschichtung (über der ersten Elektrode und dem Pipettenkörper)
- 9: leitende Spitze, Eintauchdetektionselektrode/-kontakt
- 10: zweite Elektrode, streifenförmige Eintauchdetektionselektrode/-kontakt
- 10': zweite Elektrode, den halben Umfang der Pipettenspitze umfassende Eintauchdetektionselektrode/-kontakt
- 11: (Kapazitäts-)Messeinheit
- 12: Detektionseinheit
- 13: Steuereinheit zur Bewegungssteuerung des Antriebs des Pipettierroboters
- 14: Pipettierroboter inkl. Antrieb
- 15: Pipettenspitzenhalterung/-träger
- 16: Aufnahme für eine Pipettenspitze
- 17: Arbeitstisch/-fläche
- 18: elektrischer Kontakt
- 19: Behälter, wie z.B. eine Mikroplatte mit Wells
- a: Achse der Pipettenspitze
- bₐ: Elektrodenbreite a
- b_{b}: Elektrodenbreite b
- b_{c}: Elektrodenbreite c
- x: erste horizontale Bewegungsachse des Pipettierroboters (z.B. nach vorne und hinten)
- y: zweite horizontale Bewegungsachse des Pipettierroboters (z.B. nach links und rechts)
- z: vertikale Bewegungsachse des Pipettierroboters (nach unten und oben)

## Patentansprüche

1. Pipettenspitze (1) zum Anschliessen an eine Pipettenröhre (2) von einer Pipettiervorrichtung (3), wobei die Pipettenspitze (1) als langgestreckte Röhre geformt ist, welche einen Pipettenkörper (4) bildet, der an seinem einen, ersten Ende eine Öffnung (5) zum Aspirieren und/oder Dispensieren von Flüssigkeiten (6) aufweist, und an seinem anderen Ende zum Anschliessen an die Pipettenröhre (2) ausgebildet ist, wobei die Pipettenspitze (1) eine erste Elektrode (7) als Volumenmesselektrode eines Messkondensators aufweist, wobei die erste Elektrode (7) streifenförmig ausgebildet ist und axial entlang der Pipettenspitze (1) verläuft, und wobei die erste Elektrode (7) abschnittsweise unterschiedlich breit ist, **dadurch gekennzeichnet, dass** die erste Elektrode (7) ein treppenstufenförmiges Breitenprofil in axialer Richtung aufweist, und die Breite der ersten Elektrode (7) z.B. am ersten Ende am geringsten ist, und die Breite in axialer Richtung stufenweise grösser wird.

2. Pipettenspitze (1) nach Anspruch 1, wobei sich die erste Elektrode (7) auf einer äusseren Oberfläche des Pipettenkörpers (4) befindet oder im Pipettenkörper (4) eingebettet ist.

3. Pipettenspitze (1) nach Anspruch 1 oder 2, wobei der Pipettenkörper (4) aus einem elektrisch nichtleitenden P217026 Material, insbesondere einem nichtleitenden Kunststoff, wie beispielsweise nichtleitendes Polypropylen, besteht, welches insbesondere zumindest als Teil eines Dielektrikums des Messkondensators wirkt.

4. Pipettenspitze (1) nach einem der Ansprüche 1 bis 3, wobei die erste Elektrode (7) sich nicht bis zur Öffnung (5) am ersten Ende erstreckt und insbesondere von dieser Öffnung (5) beabstandet ist in einem Bereich von 3 mm bis 6 mm, bevorzugt im Bereich von 4.5 mm bis 5.5 mm, besonders bevorzugt um 5 mm.

5. Pipettenspitze (1) nach einem der Ansprüche 1 bis 4, wobei der Pipettenkörper (4) am ersten Ende eine leitende Spitze (9) mit der Öffnung (5) zum Aspirieren und/oder Dispensieren von Flüssigkeiten (6) als Eintauchdetektionselektrode aufweist, wobei die leitende Spitze (9) insbesondere eine Länge in einem Bereich von 3 mm bis 6 mm, bevorzugt im Bereich von 4.5 mm bis 5.5 mm, besonders bevorzugt von 5 mm, und weiter insbesondere aus demselben Material besteht wie die erste Elektrode (7).

6. Pipettenspitze (1) nach einem der Ansprüche 1 bis 5, wobei die Pipettenspitze (1) eine zweite Elektrode (10) als Eintauchdetektionselektrode aufweist, welche insbesondere im Wesentlichen gegenüber der ersten Elektrode (7) angeordnet ist, und welche weiter insbesondere aus demselben Material besteht wie die erste Elektrode (7).

7. Pipettenspitze (1) nach Anspruch 6, wobei sich die zweite Elektrode (10) auf einer inneren und/oder äusseren Oberfläche des Pipettenkörpers (4) befindet oder einen durchgehenden Teil einer Wand des Pipettenkörpers (4) bildet.

8. Pipettenspitze (1) nach Anspruch 6 oder 7, wobei die zweite Elektrode (10) streifenförmig ausgebildet ist und axial entlang der Röhre verläuft, und insbesondere bis zu zwei Dritteln des Umfangs der Pipettenspitze (1) umspannt, weiter insbesondere die Hälfte des Umfangs der Pipettenspitze (1) umspannt.

9. Pipettenspitze (1) nach einem der Ansprüche 6 bis 8, wobei die zweite Elektrode (10) sich bis zur Öffnung (5) am ersten Ende erstreckt.

10. Pipettenspitze (1) nach einem der Ansprüche 1 bis 9, wobei die Pipettenspitze (1) eine Wegwerf-Pipettenspitze ist, welche insbesondere zum einmaligen Gebrauch vorgesehen ist.

11. Pipettiervorrichtung (3) umfassend eine Pipettenröhre (2), eine Pipettenspitze (1) nach einem der Ansprüche 1 bis 10, ein Druckerzeugungsmittel sowie eine Messeinheit (11), wobei die Pipettenspitze (1) fluiddicht an einem ersten Ende der Pipettenröhre (2) angeschlossen ist, und wobei die Pipettenröhre (2) an ihrem anderen Ende mit dem Druckerzeugungsmittel verbunden ist, wobei in einem Bereich zum Anschliessen der Pipettenspitze (1) ein elektrischer Kontakt (18) zur Herstellung einer elektrischen Verbindung, insbesondere einer galvanischen Verbindung, mit einer ersten Elektrode (7) als Volumenmesselektrode an der Pipettenspitze (1) vorhanden ist, welcher mit der Messeinheit (11) verbunden ist, wobei die Messeinheit (11) ausgebildet ist, um in Abhängigkeit einer gemessenen Kapazität eines Messkondensators, welcher durch die erste Elektrode (7) und mindestens einen Teil einer in der Pipettenspitze (1) aufnehmbaren Probenflüssigkeit (6) als Gegenelektrode gebildet wird, ein Volumen einer sich in der Pipettenspitze (1) befindenden Probenflüssigkeit (6) zu bestimmen.

12. Pipettiervorrichtung (3) nach Anspruch 11, wobei die Messeinheit (11) weiter ausgebildet ist, um mit Hilfe einer leitenden Spitze (9) an der Pipettenspitze (1) nach Anspruch 5 und/oder einer zweiten Elektrode (10) an der Pipettenspitze (1) nach einem der Ansprüche 6 bis 9 als Eintauchdetektionselektrode ein Eintauchen der Pipettenspitze (1) in die Probenflüssigkeit (6) zu detektieren.

13. Pipettiervorrichtung (3) nach Anspruch 11 oder 12, weiter umfassend eine Detektionseinheit (12) zum Erkennen ob die Pipettenspitze (1) am ersten Ende der Pipettenröhre (2) angeschlossen ist, und/oder zum Erkennen eines charakteristischen Merkmals der Pipettenspitze (1) basierend auf einer Messung einer weiteren Kapazität, wobei die weitere Kapazität abhängig ist von:
- einer Geometrie der ersten und/oder zweiten Elektrode (7, 10) und/oder der leitenden Spitze (9).

14. Verfahren zum Bestimmen eines Volumens einer Probenflüssigkeit (6) in einer Pipettenspitze (1) nach einem der Ansprüche 1 bis 10, wobei das Verfahren folgende Schritte umfasst:
- Messen einer Kapazität eines Messkondensators umfassend eine erste Elektrode (7) an der Pipettenspitze (1) und eine Gegenelektrode, die durch mindestens einen Teil einer Probenflüssigkeit (6), welche sich in der Pipettenspitze (1) befindet, gebildet wird;
- Bestimmen des Volumens der Probenflüssigkeit (6) in der Pipettenspitze (1) in Abhängigkeit der gemessenen Kapazität.

15. Verfahren nach Anspruch 14, weiter umfassend den Schritt:
- Detektieren eines Eintauchens der Pipettenspitze (1) in die Probenflüssigkeit (6) mit Hilfe einer leitenden Spitze (9) an der Pipettenspitze (1) nach Anspruch 5 und/oder einer zweiten Elektrode (10) an der Pipettenspitze (1) nach einem der Ansprüche 6 bis 9 als Eintauchdetektionselektrode.

16. Verfahren zum Erkennen einer Pipettenspitze (1) nach einem der Ansprüche 1 bis 10 an einer Pipettiervorrichtung (3) mit einer Pipettenröhre (2), die an ihrem einen, ersten Ende zum lösbaren Aufnehmen einer Pipettenspitze (1) zum Aspirieren bzw. Dispensieren einer Flüssigkeit (6) ausgebildet ist, und die an ihrem anderen Ende mit einem Druckerzeugungsmittel wirkverbunden ist, wobei das Verfahren ein Messen einer Kapazität umfasst, die abhängig ist von:
- einer Geometrie der ersten und/oder zweiten Elektrode (7, 10) und/oder der leitenden Spitze (9).

17. Verwendung der Pipettenspitze (1) nach einem der Ansprüche 1 bis 10 zum Bestimmen eines Volumens einer Probenflüssigkeit (6), welche sich in der Pipettenspitze (1) befindet, mit Hilfe einer ersten Elektrode (7) als Volumenmesselektrode an der Pipettenspitze (1).

18. Verwendung nach Anspruch 17 der Pipettenspitze (1) nach einem der Ansprüche 5 bis 9 zum Detektieren eines Eintauchens der Pipettenspitze (1) in die Probenflüssigkeit (6) mit Hilfe einer leitenden Spitze (9) und/oder einer zweiten Elektrode (10) als Eintauchdetektionselektrode an der Pipettenspitze (1).

19. Satz von Pipettenspitzen (1) nach einem der Ansprüche 1 bis 10 umfassend mindestens zwei Typen von Pipettenspitzen (1), wobei sich die mindestens zwei Typen darin unterscheiden, dass beim Anwenden des Verfahrens zum Erkennen einer Pipettenspitze (1) nach Anspruch 16 eine Kapazität eines ersten Typs von Pipettenspitzen (1) in einem ersten Bereich liegt und die Kapazität eines zweiten Typs von Pipettenspitzen (1) in einem zweiten Bereich liegt, wobei der erste und zweite Bereich nicht überlappend sind, und wobei sich die mindestens zwei Typen von Pipettenspitzen (1) insbesondere durch eines der folgenden Merkmale unterscheiden:
- Fassungsvolumen;
- Spitzenöffnungsgrösse/-durchmesser zum Aspirieren und Dispensieren einer Flüssigkeit;
- mit oder ohne Filter zur Verhinderung von Kontaminationen der Pipettenröhre (2) beim Aspirieren einer Probenflüssigkeit (6), sowie insbesondere eine Art des Filters;
- Reinheitskategorie;
- Verwendungszweck;
- Volumenmessfunktion;
- Dichtungsvermögen eines Anschlusses der Pipettenspitzen (1) an die Pipettenröhre (2),
und wobei insbesondere die äussere Geometrie der mindestens zwei Typen von Pipettenspitzen (1) identisch sein kann.

## Claims

1. Pipette tip (1) for connection to a pipette tube (2) of a pipetting device (3), wherein the pipette tip (1) is formed as an elongated tube, which forms a pipette body (4), which has at its one first end an opening (5) for aspirating and/or dispensing liquids (6), and is formed at its other end for connection to the pipette tube (2), wherein the pipette tube (1) has a first electrode (7) as a volume measuring electrode of a measuring capacitor, wherein the first electrode (7) is in the form of a strip, extends axially along the pipette tip (1), and sectionally has different widths, **characterized in that** the first electrode (7) has a stepped width profile in the axial direction, and the width of the first electrode (7) for example is least at the first end and the width becomes greater in steps in the axial direction.

2. Pipette tip (1) according to claim 1, wherein the first electrode (7) is located on an outer surface of the pipette body (4) or is embedded in the pipette body (4).

3. Pipette tip (1) according to claim 1 or 2, wherein the pipette body (4) consists of an electrically nonconductive material, in particular a nonconductive plastic, for example, nonconductive polypropylene, which in particular acts as at least a part of a dielectric material of the measuring capacitor.

4. Pipette tip (1) according to one of claims 1 to 3, wherein the first electrode (7) does not extend up to the opening (5) at the first end and in particular is spaced apart from this opening (5) in a range from 3 mm to 6 mm, preferably in the range from 4.5 mm to 5.5 mm, particularly preferably by 5 mm.

5. Pipette tip (1) according to one of claims 1 to 4, wherein the pipette body (4) has, at the first end, a conductive tip (9) with the opening (5) for aspirating and/or dispensing liquids (6) as an immersion detection electrode, wherein the conductive tip (9) in particular has a length in a range from 3 mm to 6 mm, preferably in the range from 4.5 mm to 5.5 mm, particularly preferably of 5 mm, and further in particular consists of the same material as the first electrode (7).

6. Pipette tip (1) according to one of claims 1 to 5, wherein the pipette tip (1) has a second electrode (10) as an immersion detection electrode, which is in particular arranged substantially opposite to the first electrode (7), and which further in particular consists of the same material as the first electrode (7).

7. Pipette tip (1) according to claim 6, wherein the second electrode (10) is located on an inner and/or outer surface of the pipette body (4) or forms a continuous part of a wall of the pipette body (4).

8. Pipette tip (1) according to claim 6 or 7, wherein the second electrode (10) is in the form of a strip and extends axially along the tube, and in particular spans up to two-thirds of the circumference of the pipette tip (1), further in particular spans half of the circumference of the pipette tip (1).

9. Pipette tip (1) according to one of claims 6 to 8, wherein the second electrode (10) extends up to the opening (5) at the first end.

10. Pipette tip (1) according to one of claims 1 to 9, wherein the pipette tip (1) is a disposable pipette tip, which is provided in particular for one-time use.

11. Pipetting device (3) comprising a pipette tube (2), a pipette tip (1) according to one of Claims 1 to 10, a pressure generating means, and a measuring unit (11), wherein the pipette tip (1) is connected to the pipette tube (2) at its one first end in a fluid-tight manner and is connected at its other end to the pressure generating means, wherein an electrical contact (18) for establishing an electrical connection, in particular a galvanic connection, to a first electrode (7) as a volume measuring electrode on the pipette tip (1) is provided in a region for connecting the pipette tip (1), which is connected to the measuring unit (11), wherein the measuring unit (11) is adapted to determine a volume of a sample liquid (6) located in the pipette tip (1) as a function of a measured capacitance of a measuring capacitor, which is formed by the first electrode (7) and at least a part of a sample liquid (6) receivable in the pipette tip (1) as a counter electrode.

12. Pipetting device (3) according to claim 11, wherein the measuring unit (11) is further adapted to detect an immersion of the pipette tip (1) into the sample liquid (6) with the aid of a conductive tip (9) on the pipette tip (1) according to claim 7 and/or a second electrode (10) on the pipette tip (1) according to one of claims 8 to 11 as an immersion detection electrode.

13. Pipetting device (3) according to claim 11 or 12, further comprising a detection unit (12) for detecting whether the pipette tip (1) is connected to the first end of the pipette tube (2), and/or for detecting a characteristic feature of the pipette tip (1) based on a measurement of a further capacitance, wherein the further capacitance is dependent on:
- a geometry of the first and/or second electrode (7, 10) and/or the conductive tip (9).

14. Method for determining a volume of a sample liquid (6) in a pipette tip (1) according to one of claims 1 to 10, wherein the method comprises the following steps:
- measuring a capacitance of a measuring capacitor comprising a first electrode (7) on the pipette tip (1) and a counter electrode, which is formed by at least a part of a sample liquid (6) which is located in the pipette tip (1);
- determining the volume of the sample liquid (6) in the pipette tip (1) as a function of the measured capacitance.

15. Method according to claim 14, further comprising the following step:
- detecting an immersion of the pipette tip (1) into the sample liquid (6) with the aid of a conductive tip (9) on the pipette tip (1) according to claim 7 and/or a second electrode (10) on the pipette tip (1) according to one of claims 8 to 11 as an immersion detection electrode.

16. Method for detecting a pipette tip (1) according to one of claims 1 to 10 on a pipetting device (3) having a pipette tube (2), which is adapted at its one first end to detachably receive a pipette tip (1) for aspirating or dispensing a liquid (6), and which is operationally connected at its other end to a pressure generating means, wherein the method comprises measuring a capacitance which is dependent on:
- a geometry of the first and/or second electrode (7, 10) and/or the conductive tip (9).

17. Use of the pipette tip (1) according to one of claims 1 to 10 for determining a volume of a sample liquid (6), which is located in the pipette tip (1), with the aid of a first electrode (7) as a volume measuring electrode on the pipette tip (1).

18. Use according to claim 17 of the pipette tip (1) according to one of claims 5 to 9 for detecting an immersion of the pipette tip (1) into the sample liquid (6) with the aid of a conductive tip (9) and/or a second electrode (10) as an immersion detection electrode on the pipette tip (1).

19. Set of pipette tips (1) according to one of claims 1 to 10 comprising at least two types of pipette tips (1), wherein the at least two types differ in that when employing the method for detecting a pipette tip (1) according to claim 18, a capacitance of a first type of pipette tips (1) lies in a first range and the capacitance of a second type of pipette tips (1) lies in a second range, wherein the first and second range do not overlap, and wherein the at least two types of pipette tips (1) in particular differ in one of the following features:
- volume capacity;
- tip opening size/diameter for aspirating and dispensing a liquid;
- with or without filter for preventing contaminations of the pipette tube (2) during aspiration of a sample liquid (6), and in particular a type of the filter;
- purity category;
- intended use;
- volume measuring function;
- sealing capability of a connection of the pipette tip (1) to the pipette tube (2),
and wherein in particular the outer geometry of the at least two types of pipette tips (1) can be identical.

## Revendications

1. Pointe de pipette (1) destinée à être raccordée à un tube de pipette (2) d'un dispositif de pipetage (3), la pointe de pipette (1) étant réalisée sous la forme d'un tube allongé qui forme un corps de pipette (4) qui présente, au niveau de sa première extrémité, une ouverture (5) pour aspirer et/ou distribuer des liquides (6), et qui est réalisée au niveau de son autre extrémité de façon à être raccordée au tube de pipette (2), la pointe de pipette (1) présentant une première électrode (7) en tant qu'électrode de mesure de volume d'un condensateur de mesure, la première électrode (7) étant réalisée sous la forme d'une bande et s'étendant axialement le long de la pointe de pipette (1), et la première électrode (7) ayant par endroits une largeur différente, **caractérisée en ce que** la première électrode (7) présente un profil de largeur en forme d'escalier dans le sens axial, et **en ce que** la largeur de la première électrode (7) est par exemple la plus petite au niveau de la première extrémité et **en ce que** la largeur augmente graduellement dans le sens axial.

2. Pointe de pipette (1) selon la revendication 1, dans laquelle la première électrode (7) est située sur une surface extérieure du corps de pipette (4) ou bien est intégrée dans le corps de pipette (4).

3. Pointe de pipette (1) selon la revendication 1 ou 2, dans laquelle le corps de pipette (4) est composé d'un matériau électriquement non conducteur, en particulier un plastique non conducteur, comme par exemple du polypropylène non conducteur, lequel agit en particulier au moins comme partie d'un diélectrique du condensateur de mesure.

4. Pointe de pipette (1) selon l'une des revendications 1 à 3, dans laquelle la première électrode (7) ne s'étend pas jusqu'à l'ouverture (5) au niveau de la première extrémité et est en particulier espacée de cette ouverture (5) dans une plage allant de 3 mm à 6 mm, de préférence dans la plage allant de 4,5 mm à 5,5 mm, de préférence de 5 mm.

5. Pointe de pipette (1) selon l'une des revendications 1 à 4, dans laquelle le corps de pipette (4) présente au niveau de la première extrémité une pointe conductrice (9) avec une ouverture (5) pour aspirer et/ou distribuer des liquides (6) comme électrode de détection d'immersion, la pointe conductrice (9) présentant en particulier une longueur comprise entre 4,5 mm et 5,5 mm, de préférence une longueur de 5 mm, et étant notamment composée du même matériau que la première électrode (7).

6. Pointe de pipette (1) selon l'une des revendications 1 à 5, dans laquelle la pointe de pipette (1) présente une deuxième électrode (10) comme électrode de détection d'immersion, laquelle est agencée en particulier sensiblement face à la première électrode (7) et qui est en outre composée du même matériau que la première électrode (7) .

7. Pointe de pipette (1) selon la revendication 6, dans laquelle la deuxième électrode (10) est située sur une surface intérieure et/ou extérieure du corps de pipette (4) ou bien forme une partie continue d'une paroi du corps de pipette (4).

8. Pointe de pipette (1) selon la revendication 6 ou 7, dans laquelle la deuxième électrode (10) est réalisée en forme de bande et s'étend axialement le long du tube et s'étend en particulier jusqu'au deux tiers du pourtour de la pointe de pipette (1), plus particulièrement sur la moitié du pourtour de la pointe de pipette (1).

9. Pointe de pipette (1) selon l'une des revendications 6 à 8, dans laquelle la deuxième électrode (10) s'étend jusqu'à l'ouverture (5) au niveau de la première extrémité.

10. Pointe de pipette (1) selon l'une des revendications 1 à 9, dans laquelle la pointe de pipette (1) est une pointe de pipette jetable, prévue en particulier pour un usage unique.

11. Dispositif de pipetage (3) comprenant un tube de pipette (2), une pointe de pipette (1) selon l'une des revendications 1 à 10, un dispositif générateur de pression ainsi qu'une unité de mesure (11), dans lequel la pointe de pipette (1) est raccordée de façon étanche à une première extrémité du tube de pipette (2), et dans lequel le tube de pipette (2) est raccordé au niveau de son autre extrémité au dispositif générateur de pression, dans lequel il est agencé sur la pointe de pipette (1), dans une zone destinée au raccordement de la pointe de pipette (1), un contact électrique (18) pour établir une liaison électrique, en particulier une liaison galvanique, avec une première électrode (7) en tant qu'électrode de mesure de volume, lequel contact est raccordé à l'unité de mesure (11), dans lequel l'unité de mesure (11) est conçue pour déterminer, en fonction d'une capacité mesurée d'un condensateur de mesure, lequel est formé par la première électrode (7) et au moins une partie d'un échantillon liquide (6) pouvant être reçu dans la pointe de pipette (1) comme contre-électrode, le volume d'un échantillon liquide (6) se trouvant dans la pointe de pipette (1).

12. Dispositif de pipetage (3) selon la revendication 11, dans lequel l'unité de mesure (11) est en outre conçue pour détecter, à l'aide d'une pointe conductrice (9) sur la pointe de pipette (1) selon la revendication 5 et/ou à l'aide d'une deuxième électrode (10) sur la pointe de pipette (1) selon l'une des revendications 6 à 9 comme électrode de détection d'immersion, l'immersion de la pointe de pipette (1) dans l'échantillon liquide (6).

13. Dispositif de pipetage (3) selon la revendication 11 ou 12, comprenant en outre une unité de détection (12) pour détecter si la pointe de pipette (1) est raccordée à la première extrémité du tube de pipette (2), et/ou pour détecter une caractéristique de la pointe de pipette (1) sur la base d'une mesure d'une autre capacité, l'autre capacité dépendant de :
- la géométrie de la première et/ou de la deuxième électrode (7, 10) et/ou de la pointe conductrice (9).

14. Procédé pour déterminer le volume d'un échantillon liquide (6) dans une pointe de pipette (1) selon l'une des revendications 1 à 10, le procédé comprenant les étapes suivantes :
- mesurer la capacité d'un condensateur de mesure comprenant une première électrode (7) sur la pointe de pipette (1) et une contre-électrode formée par au moins une partie d'un échantillon liquide (6) se trouvant dans la pointe de pipette (1) ;
- déterminer le volume de l'échantillon liquide (6) dans la pointe de pipette (1) en fonction de la capacité mesurée.

15. Procédé selon la revendication 14 comprenant en outre l'étape consistant à :
- détecter l'immersion de la pointe de pipette (1) dans l'échantillon liquide (6) à l'aide d'une pointe conductrice (9) sur la pointe de pipette (1) selon la revendication 5 et/ou à l'aide d'une deuxième électrode (10) sur la pointe de pipette (1) selon l'une des revendications 6 à 9 comme électrode de détection d'immersion.

16. Procédé pour détecter une pointe de pipette (1) selon l'une des revendications 1 à 10 sur un dispositif de pipetage (3) comprenant un tube de pipette (2) qui est réalisé au niveau de sa première extrémité pour recevoir de façon amovible une pointe de pipette (1) pour aspirer et/ou distribuer un liquide (6) et qui est en liaison active, au niveau de son autre extrémité, avec un dispositif générateur de pression, le procédé consistant à mesurer une capacité qui dépend de :
- la géométrie de la première et/ou de la deuxième électrode (7, 10) et/ou de la pointe conductrice (9).

17. Utilisation de la pointe de pipette (1) selon l'une des revendications 1 à 10 pour déterminer le volume d'un échantillon liquide (6) qui se trouve dans la pointe de pipette (1) à l'aide d'une première électrode (7) comme électrode de mesure de volume sur la pointe de pipette (1).

18. Utilisation selon la revendication 17 de la pointe de pipette (1) selon l'une des revendications 5 à 9 pour détecter l'immersion de la pointe de pipette (1) dans l'échantillon liquide (6) à l'aide d'une pointe conductrice (9) et/ou à l'aide d'une deuxième électrode (10) comme électrode de détection d'immersion sur la pointe de pipette (1) .

19. Jeu de pointes de pipette (1) selon l'une des revendications 1 à 10, comprenant au moins deux types de pointes de pipettes (1), les au moins deux types se distinguant en ce que, lors de l'utilisation du procédé pour détecter une pointe de pipette (1) selon la revendication 16, la capacité du premier type de pointes de pipette (1) se trouve dans une première plage, et la capacité du deuxième type de pointes de pipette (1) se trouve dans une deuxième plage, la première et la deuxième plages ne se chevauchant pas, et les au moins deux types de pointes de pipette (1) se distinguant en particulier par au moins l'une des caractéristiques suivantes :
- la capacité en volume ;
- la taille / le diamètre de l'ouverture de pointe pour aspirer et distribuer un liquide ;
- la présence ou l'absence de filtre pour empêcher la contamination du tube de pipette (2) lors de l'aspiration de l'échantillon liquide (6), et en particulier le type de filtre ;
- la catégorie de pureté ;
- la finalité ;
- la fonction de mesure de volume ;
- la capacité d'étanchéité du raccordement des pointes de pipette (1) sur les tubes de pipette (2),
et dans lequel en particulier la géométrie extérieure des au moins deux types de pointes de pipette (1) peut être identique.
